# EUROPEAN PATENT APPLICATION

(11) **EP 4 252 892 A1**
(43) Date of publication of application: **04.10.2023**
(21) Application number: 23164497.2
(22) Date of filing: 27.03.2023
(51) Int. Cl.: B01D 61/14, B01D 67/00, B01D 69/06, B01D 69/14

(54) **FILTRATION MEDIA AND SYSTEMS FOR REDUCTION OF MICROPOLLUTANTS IN LIQUIDS**

(30) Priority: 29.03.2022 US 202263324658 P; 22.03.2023 US 202318124725
(71) Applicant: Whirlpool Corporation, Benton Harbor, MI 49022 (US)
(72) Inventor: Basso, Margherita, 21024 Cassinetta di Biandronno (VA) (IT); Hill, Jr., Anthony S., 21024 Cassinetta di Biandronno (VA) (IT); Khizar, Muhammad, 21024 Cassinetta di Biandronno (VA) (IT)
(74) Representative: Spina, Alessandro

(57) **Abstract**

A washing machine (1) includes a filter (82) that is operably connected to a water circulation system (10) to filter water. The filter (22) may include a mesh filter element (22A) and a porous membrane (46) whereby water passes through the mesh element (22A) and then through the porous membrane (46) prior to exiting the washing machine (1). The porous membrane (46) may include a plurality of openings (45) of about 5 microns to about 100 microns to capture microparticles.

## Description

### BACKGROUND OF THE DISCLOSURE

The present disclosure generally relates to washing machines and, more specifically, to a washing machine including a filter arrangement for removing particles such as microfibers from water.

### SUMMARY OF THE DISCLOSURE

One aspect of the present disclosure is a washing machine including a washing compartment and a water circulation system that is configured to connect to an external water supply and to provide water from the external water supply to the washing compartment. The water circulation system is also configured to drain water to an outlet of the washing machine. The washing machine includes a filter comprising one or more filter elements optionally comprising filter media. The filter may be operably connected to the water circulation system to filter water flowing through the water circulation system. The filter may include filter media in the form of a mesh filter element and filter media in the form of a porous membrane whereby water flowing through the water circulation system passes through the mesh filter element and then passes through the porous membrane prior to exiting the outlet of the washing machine. The mesh filter element may be configured to remove larger microfibers (natural and/or synthetic) and the porous membrane may be configured to remove smaller microfibers (e.g. 360-660 µm (microns) length; 12-16 µm diameter) and/or microparticles (e.g. 20-300 µm (microns)). The mesh filter element may optionally comprise a preformed polymer mesh, and may optionally have openings of at least about 100 µm (microns). The porous membrane may be configured to remove microparticles (e.g. polyamide and/or polystyrene of about 20 µm-300 µm); it includes a plurality of openings of about 5 microns (5 µm) to about 100 microns (100 µm), whereby the porous membrane captures microparticles.

The water circulation system may optionally include a pump that recirculates at least some water by causing water that has exited the washing compartment to flow through a detergent dispenser and then into the washing compartment. The preformed polymer mesh may be positioned in a fluid passageway upstream or downstream of the detergent dispenser. The porous membrane may optionally be positioned in a fluid passageway adjacent to the outlet, whereby water that has passed through the washing compartment passes through the porous membrane before flowing out of the outlet.

The water circulation system may include a fluid passageway downstream of the washing compartment. The preformed polymer mesh and/or the porous membrane may be disposed in the fluid passageway, whereby water passes through the preformed polymer mesh and the porous membrane before flowing out of the outlet.

The porous membrane may include pores of about 1 micron to about 10 microns, and more preferably about 3.5 microns to about 5 microns. The porous membrane may have a thickness of about 50-150 microns, or any other suitable thickness (e.g. 25-250 microns, 10-500 microns, 10-1000 microns, etc.). The porous membrane may comprise one or more of Hydrophilic Polycarbonate (PC) having a static water contact angle of 71.0 ± 2.7 degrees; Hydrophobic Cellulose Acetate (CA) having a static water contact angle of about 90-125 degrees; Hydrophobic Polytetrafluoroethylene (PTFE) having a static water contact angle of about 90-110 degrees; and Hydrophobic Graphene Oxide based carbon nanotube (GOx-CNT) having a static water contact angle of about 90-125 degrees, whereby the porous membrane removes polymer microparticles of about 20 microns (or smaller, e.g. 5-10 microns) to about 300 microns (or larger e.g. 500-1,000 microns) from the water or other liquid.

PC and CA membranes according to the present disclosure may be negatively charged, with a zeta potential of about -11.5 mV at a pH of approximately 7.4, and .35 mV at a pH of approximately 6.0, respectively. In general, CA and GOx-CNT membranes according to the present disclosure may have a stronger negatively charged surface compared to a PC membrane according to the present disclosure.

Membranes according to the present disclosure may remove microparticles by size-exclusion and/or pore adsorption if electrostatic interaction occurs. Size-exclusion may comprise the primary mechanism for removing microparticles from liquid (e.g. water). Testing demonstrated that CA and GOx-CNT membranes having (nominal) 5 µm pores according to the present disclosure may provide at least about 95% microplastic filtration (mass removal efficiency) when filtering 100 Mg/L of microplastics from laundry graywater through a membrane having a diameter of 50 mm, and may provide greater water flux density compared to 50 mm diameter PC and PTFE membranes having (nominal) 5 µm pores. It will be understood that this is merely an example of a mass removal efficiency according to an aspect of the present disclosure, and the present disclosure is not limited to a specific mass removal efficiency. It will be understood that the static water contact angle of the membrane may vary as a function of the material composition. For example, a GOx-CNT material comprising 0% CNT will have a static water contact angle of about 102 degrees, whereas GOx-CNT materials having CNT content of 0.1%, 0.3%, 0.5% and 0.7% will have static water contact angles of about 119 degrees, 122 degrees, 128 degrees, and 125 degrees, respectively.

The filter may optionally include a porous filter element (e.g. a membrane) comprising cellulose acetate having a pore size of about 3.5 microns to about 5 microns. The filter element (membrane) may be formed by blending polytetrafluoroethylene and cellulose acetate with graphene oxides.

The porous filter element may be in the form of a membrane, and it may comprise a polymeric matrix composed of cellulose acetate and polyethylenimine (PEI), and crosslinked with glutaraldehyde. The porous membrane may be formed by combining graphene oxide (GO), polymer, and glutaraldehyde solution, which are weighed and then stirred for a sufficient time (e.g. several hours) to obtain a substantially homogeneous glutaraldehyde spinning solution. The mixture may be stirred utilizing a magnetic stirrer apparatus or other suitable device. The high concentration of PTFE aqueous emulsion, GO, cellulose acetate, and matrix polymer glutaraldehyde are mixed to make a spinning solution. Finally, the polymer solution is electrospun into nanofibers at room temperature. For the electrospinning process, an electronic spinning device may be used. The spinning device may optionally operate at 220 V and the output voltage may reach 22 kV. The dispersion for electrospinning may be prepared by mixing GO and a PTFE dispersion and cellulose acetate solution (about 15 wt %). The composition may be about 5.5 wt % cellulose acetate, PTFE: V = 5:1. In one example, about 6 wt % of cellulose acetate is used while dissolved in water, whereas GOx (graphene oxide) and PTFE (Polytetrafluoroethylene) loading concentration may be about 28 wt %, respectively. Electrospinning may be performed at a constant applied voltage of about 20 kV, with an advancement rate of about 0.06 mL·min-1, and a spinning distance of about 11.5 cm. Because it may be somewhat difficult to spin pure PTFE into nanofibers directly by solution electrospinning, a small amount of water-soluble cellulose acetate may be added into the cellulose acetate/PTFE dispersion as an assistant polymer. In the electrospinning process of cellulose acetate/PTFE dispersion, cellulose acetate supports the fibrous arrangement of PTFE particles. After electrospinning, the electrospun composite fibers may be placed in a high-temperature oven at about 250 °C for about 8 min. A hot-pressing process may be used with a hot-pressing pressure of ^{~} 1.2 MPa, a temperature of about 199 °C, and a hot-pressing time of ^{~}15 seconds. Hot pressing may be controlled to provide a membrane thickness of about 50 microns to about 150 microns, or other suitable thickness as required. The porous membrane may have openings of about 3.5 microns to about 5.0 microns. In general, the porosity of the membrane may be about 45%-65%. However, the present disclosure is not limited to this range. The number of openings per unit area may be adjusted as required to provide suitable water flow rate through the porous membrane for a particular application. The size (area) of the membrane may also be selected to provide a suitable water flow rate as required. The openings may be formed by utilizing a porous PTFE in the process described above. Use of porous PTFE provides for control of the pore (opening) size in the membrane during the electrospinning process given the loading concentration of the other active ingredients such as GO and cellulose acetate.

The filter may optionally include a porous membrane comprising a perforated graphene mesh having perforations of about 60 microns to about 100 microns to remove microfibers (natural and/or polymer or other synthetic) and/or other particles. The perforated graphene mesh may be configured to remove microfibers having lengths of, for example, 360-660 microns and diameters of, for example, 12-16 microns. It will be understood that a perforated graphene mesh with perforations of about 60-100 microns may be capable of removing microfibers that are significantly shorter than 360 microns (e.g. 50-100 microns) and may also remove microfibers that are significantly longer (e.g. 800-2,000 microns). The filter may optionally include a first membrane comprising a perforated graphene mesh having perforations of about 60 microns to about 100 microns to remove microfibers and a second membrane comprising cellulose acetate having a pore size of about 3.5 microns to about 5 microns. The first membrane may be configured to remove microfibers and the second membrane may be configured to remove microparticles that are smaller than the microfibers.

The porous membrane may, optionally, be cylindrical and may be positioned in a fluid passageway adjacent to the exit of the washing machine.

Another aspect of the present disclosure is a washing machine including a washing compartment and a water circulation system that causes water to flow through the washing compartment prior to exiting the washing machine through a water line, at least a portion of which is on an exterior of the washing machine. The washing machine includes a filter that is fluidly connected to the water line. The filter includes a filter housing having an inner surface disposed about a filter cavity. The inner surface may be cylindrical or other suitable shape. The filter also includes a porous filter element disposed in the filter cavity. The porous cylindrical filter element may optionally be oblong and/or may optionally have a substantially cylindrical outer surface and opposite upstream and downstream ends. The upstream end and/or the downstream end may optionally be flat. The porous filter element may have a length and a width, and the length may optionally be greater than the width. The porous cylindrical filter element preferably comprises a substantially homogenous graphene open mesh matrix. The porous cylindrical filter element may have openings of about 20 microns to about 200 microns, and more preferably about 60 microns to about 100 microns to remove microfibers from water and/or other particles passing through the porous cylindrical filter element.

The water line may optionally include first and second sections on an exterior of the washing machine, and the filter housing may include first and second threaded fittings at opposite ends thereof that are sealingly connected to ends of the first and second sections, respectively, of the water line.

The filter may optionally further include a polymer mesh with larger openings (e.g. at least about 100 microns) disposed upstream of the porous cylindrical filter element, and may optionally include one or more membranes downstream of the porous cylindrical filter element. The one or more downstream membranes may comprise a polymer or other material having smaller openings (e.g. about 3.5 microns to about 5 microns) to remove microparticles. The downstream membrane may comprise one or more of Hydrophilic Polycarbonate (PC) 71.0 ± 2.7 degrees (e.g. static water contact angle of about 68.3-73.7 degrees; Hydrophobic Cellulose Acetate (CA) having a static water contact angle of about 90-125 degrees; Hydrophobic Polytetrafluoroethylene (PTFE) having a static water contact angle of about 90-110 degrees; and Hydrophobic Graphene Oxide based carbon nanotube (GOx-CNT) having a static water contact angle of about 90-125 degrees.

The washing machine may optionally include a detergent dispenser, and the water circulation system may be configured to recirculate at least some water by causing at least some water from the washing compartment to flow through the detergent dispenser before flowing back into the washing compartment. The water circulation system may, optionally, further include a polymer mesh filter upstream of the detergent dispenser.

Another aspect of the present disclosure is a filter for removing microparticles from water that recirculates through a washing compartment of a washing machine. The filter comprises a porous membrane having openings therethrough of about 3.5 microns to about 5 microns. The porous membrane may comprise one or more of Hydrophilic Polycarbonate (PC) about 71.0 ± 2.7 degrees static water contact angle; Hydrophobic Cellulose Acetate (CA) having a static water contact angle of about 90-125 degrees; Hydrophobic Polytetrafluoroethylene (PTFE) having a static water contact angle of about 90-110 degrees; and Hydrophobic Graphene Oxide based carbon nanotube (GOx-CNT) having a static water contact angle of about 90-125 degrees.

The filter may optionally include a perforated graphene mesh filter having perforations of about 60 microns to about 100 microns upstream of the porous membrane to remove microfibers and/or other larger micro particles before the liquid (e.g. water) flows through the porous membrane such that the porous membrane removes any smaller microparticles (e.g. 5 µm-300 µm or larger) that remain in the liquid after passing through the graphene mesh filter.

The filter may optionally include a mesh filter upstream of the perforated graphene mesh filter, and the plastic filter may have openings therethrough that are greater than about 100 microns. The mesh filter may comprise a plastic (polymer) material that may be molded to form a grid with openings therethrough.

Another aspect of the present disclosure is a filter for removing microparticles from water that circulates through a washing compartment of a washing machine. The filter may include a porous membrane having openings therethrough of about 3.5 microns to about 10 microns, and more preferably about 3.5 microns to about 5 microns. In one example, the openings are about 5 microns. The membrane may be formed by blending Hydrophilic Polycarbonate (PC) having a static water contact angle of about 71.0 ± 2.7 degrees; Hydrophobic Cellulose Acetate (CA) having a static water contact angle of about 90-125 degrees; Hydrophobic Polytetrafluoroethylene (PTFE) having a static water contact angle of about 90-110 degrees; and Hydrophobic Graphene Oxide based carbon nanotube (GOx-CNT) having a static water contact angle of about 90-125 degrees.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a schematic view of a washing machine according to an aspect of the present disclosure;
FIG. 2 is a schematic view of a portion of the washing machine of FIG. 1 showing a detergent dispenser and filter according to an aspect of the present disclosure;
FIG. 3 is a schematic view of a filter element according to another aspect of the present disclosure;
FIG. 4 is a schematic view of a detergent dispenser and filter according to another aspect of the present disclosure;
FIG. 5 is an isometric view of a mesh filter element according to an aspect of the present disclosure;
FIG. 6 is a side elevational view of the mesh filter element of FIG. 5;
FIG. 7 is an isometric view of a porous microfilter element according to another aspect of the present disclosure;
FIG. 8 is a flowchart showing a process of making a porous membrane that may be used for filtration;
FIG. 9 is a partially schematic isometric view of a cylindrical water filter according to another aspect of the present disclosure; and
FIG. 10 is a cross sectional view of the filter of FIG. 9.

The components in the figures are not necessarily to scale, emphasis instead being placed upon illustrating the principles described herein.

### DETAILED DESCRIPTION

The present illustrated embodiments reside primarily in combinations of method steps and apparatus components related to a washing machine and filter. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

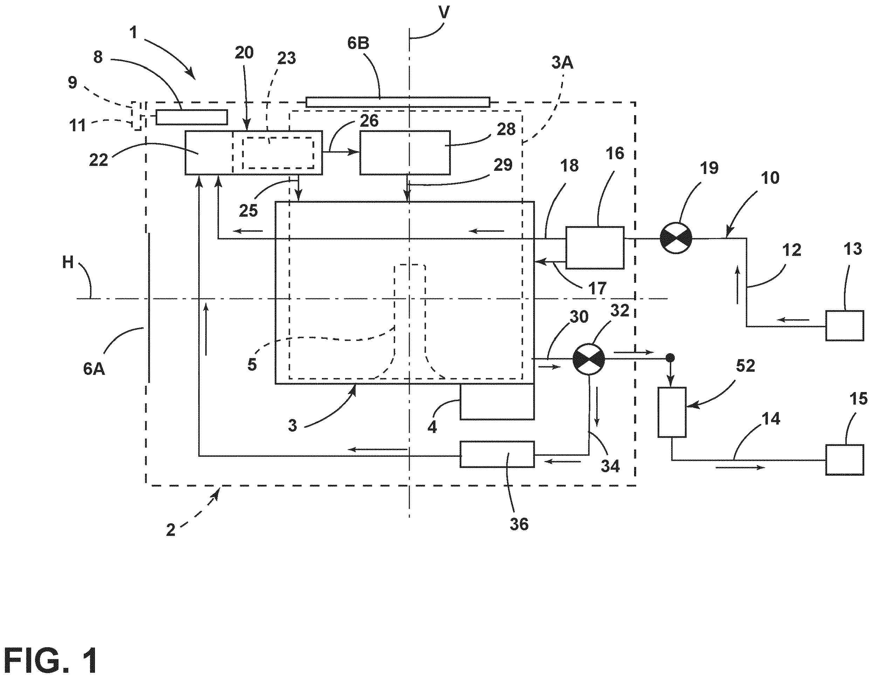

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

Microplastics may comprise water-insoluble polymer fragments (particles) that may have a size of about 1 µm to about 5 mm. Microplastic fragments (particles) below 1 µm may be referred to as nanoplastics in some cases. However, as used herein "microplastics" generally means particles or fragments of any type of plastic less than 5 mm in length unless specifically stated otherwise. Water supplies may include microplastics of various sizes and polymer materials. For example, water may include small plastic fragments (particles) of about 5 µm-100 µm, and may also include microfibers (particles) having a length of 100 µm-2,000 µm. Water may contain polymer microfibers (particles) having lengths of 360 µm-660 µm and having diameters of 12 µm-16 µm. It will be understood that water may include fragments (particles) that are outside of these ranges.

With reference to FIG. 1, a washing machine 1 according to an aspect of the present disclosure includes a housing 2 and a washing container 3 that receives laundry or other items to be laundered. The washing container 3 may comprise a horizontal unit that rotates about a horizontal axis "H" upon actuation of electric motor 4, or the washing container may comprise a vertical unit 3A that rotates about a vertical axis "V" upon actuation of motor 4. An agitator 5 may optionally be disposed in the washing container 3 or 3A. Washing machine 1 may include a side door 6A if washing machine 1 has a horizontal configuration including a washing container 3, or a top door 6B if washing machine 1 has an upright configuration including a washing container 3A. It will be understood that the various components of washing machine 1 may be positioned and configured as required for a particular horizontal or vertical machine.

As discussed in more detail below, washing machine 1 may include a controller 8 that may be configured to control the various motors, valves, and other components of the washing machine 1. A user input 9 may be operably connected to controller 8 to permit a user to select washing cycles and control machine 1. User input 9 may include a display 11 that displays information and/or provides an interactive user interface.

The washing machine 1 further includes a water circulation system 10 including an inlet line or lines 12 that may be configured to be connected to an external water source 13. The water circulation system 10 further includes an outlet water line 14 that is fluidly connected to an external drain 15. Water circulation system 10 may optionally include an inlet pump 16 and an inlet valve 19 to control water flowing through inlet line 12. The washing machine 1 may optionally include a water line 17 that causes inlet water to flow directly into washing container 3. Washing machine 1 may optionally include a water line 18 that causes water to flow into a detergent dispenser 20 before the water flows into the washing container 3. As discussed in more detail below, the washing machine 1 may optionally include a filter element 22 (or 22A) that is upstream of a dispenser compartment 23 that receives detergent whereby the water is filtered prior to passing through compartment 23. Water exiting detergent dispenser 20 may flow through a water line 25 directly into washing container 3. Alternatively, water exiting detergent dispenser 20 may flow through water line 26 to an optional filter element 28 that is downstream of detergent dispenser 20, and the water may then flow through water line 29 into washing container 3.

The water circulation system 10 may further include a water line 30 that receives water from the washing container 3. A valve 32 may be utilized to direct water to a return water line 34, and a pump 36 may cause the water to flow into detergent dispenser 20, thereby recirculating at least some of the water that has passed through the washing container 3. Valve 32 may also direct water to the outlet line 14 whereby the water exits to drain 15. It will be understood that the water circulation system 10 may be configured to recirculate and drain at least some water during a washing cycle, while introducing fresh water through inlet line 12. Although not required, at the end of a washing cycle the inlet valve 19 may be closed, and the valve 32 may direct water from washing container 3 into outlet line 14, thereby draining all or most of the water from washing container 3.

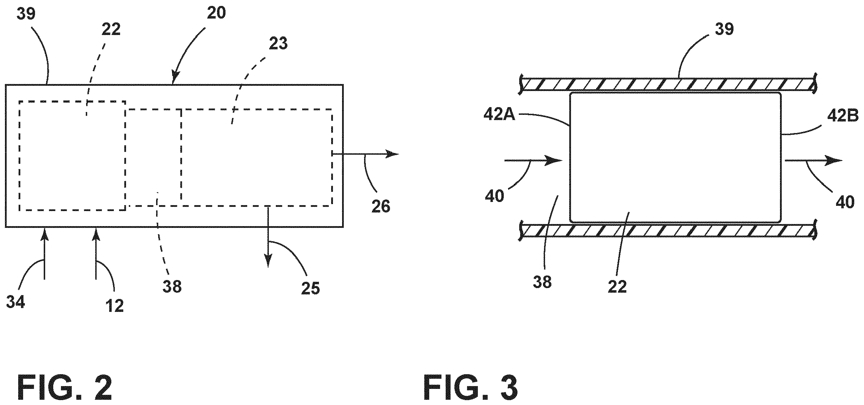

With further reference to FIGS. 2 and 3, as noted above, detergent dispenser 20 may optionally include a filter element 22 whereby water flowing through water lines 12 and/or 34 is filtered before the water enters dispenser compartment 23. Specifically, the detergent dispenser 20 may comprise a housing 39 (FIG. 3) forming internal passageway 38 whereby water 40 flows through filter element 22 prior to entering dispenser compartment 23. In general, filter element 22 may comprise a porous material (e.g. polymer) having porous sidewalls 42A and 42B having openings of at least about 100 microns to remove larger particles from the water 40. Filter element 22 may have virtually any configuration as required for a particular application, and FIGS. 2 and 3 merely provide a schematic representation of a possible configuration.

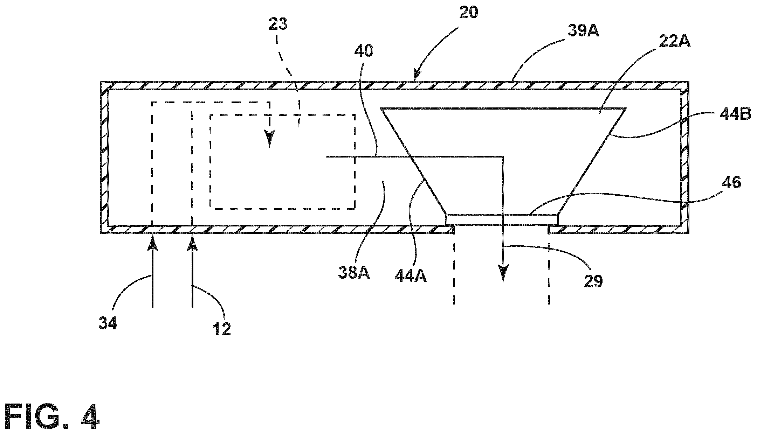

With further reference to FIG. 4, detergent dispenser 20 may alternatively (optionally) include a housing 39A forming an internal passageway 38A whereby water 40 flows through dispenser compartment 23 prior to flowing through a filter or filter element 22A and exiting to washing container 3 through water line 29. Filter element 22A may comprise a polymer material, and may include mesh sidewalls 44A and 44B. Filter element 22A may further include at least one porous membrane 46, such that water first flows through one or more of the mesh sidewalls 44A, 44B, and then through at least one porous membrane 46. Filter element 22A may have virtually any size, shape, or configuration, and sidewalls 44A, 44B do not need to be angled as shown in FIG. 4, and sidewalls 44A, 44B also do not need to be planar.

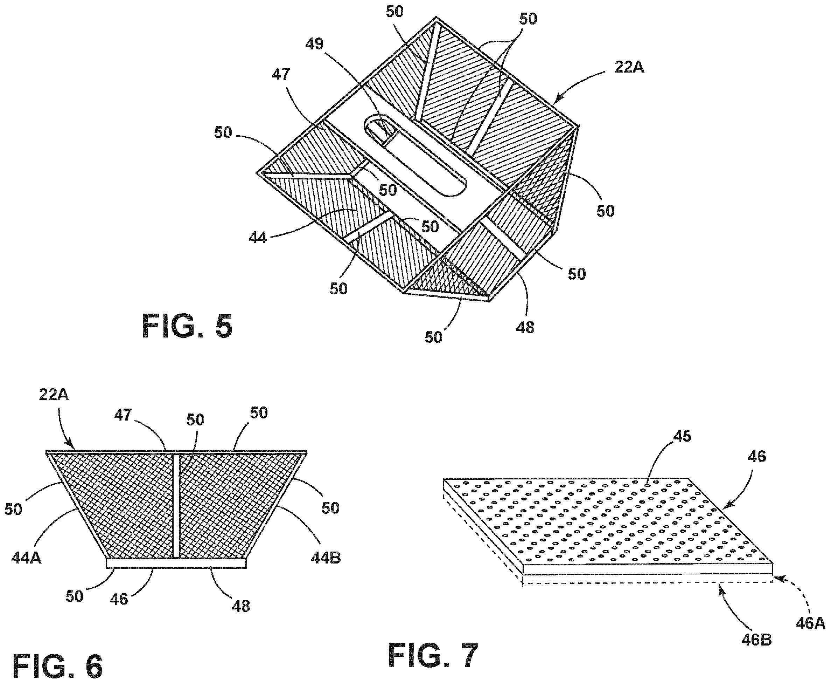

With further reference to FIGS. 5-7, filter 22A may include porous sidewalls that are tapered to form an upper opening and a lower opening 48. Filter 22A may include a handle 49 to permit installation or removal of the filter element 22A (e.g. for cleaning). The filter element 22A may optionally include thicker portions 50 to provide additional rigidity. Sidewalls 44 generally include openings that are larger than 100 microns to remove larger fibers or other particles before the water flows through porous membrane 46. As noted above, filter element 22A may have virtually any shape, and FIGS. 5-7 merely show one possible configuration. Filter element 22A may comprise injection molded or vacuum formed polymer such as LDPE, HDPE, ABS, UHMWPE, that may be recycled. It will be understood that filter element 22A, may be made from virtually any suitable material.

In general, porous membrane 46 may comprise at least one porous or perforated graphene mesh having openings or perforations 45 of about 60 microns to about 100 microns to remove microfibers and/or other particles. Microfibers produced during laundry may have a length of about 360 microns to about 660 microns, and a diameter of about 12 microns to about 16 microns. In general, perforations 45 having a nominal size of about 60 microns are believed to be suitable for removing typical microfibers, but the perforations may be smaller (e.g. about 10 microns, about 20 microns, about 30 microns, about 40 microns, about 50 microns, etc.) as required. It will be understood that FIGS. 5-7 are schematic in nature, and perforations 45 (FIG. 7) may be significantly smaller and more closely spaced than shown in FIG. 7. Similarly, the thickness of membrane 46 may be significantly less than that shown in FIG. 7.

Alternatively, porous membrane 46 may comprise one or more of Hydrophilic Polycarbonate (PC) having a static water contact angle of about 71.0 ± 2.7 degrees; Hydrophobic Cellulose Acetate (CA) having a static water contact angle of about 90-125 degrees; Hydrophobic Polytetrafluoroethylene (PTFE) having a static water contact angle of about 90-110 degrees; and/or Hydrophobic Graphene Oxide based carbon nanotube (GOx-CNT) having a static water contact angle of about 90-125 degrees, and may have nominal opening sizes of about 3.5 microns to about 10 microns, 3.5 microns to about 5 microns, or about 5 microns. This configuration provides for removal of microparticles (e.g. Polyamide and Polystyrene or other microparticles) in the range of about 20 microns to about 300 microns. Still further, the porous membrane 46 may be formed by blending polytetrafluoroethylene and cellulose acetate with graphene oxides, and may include openings of 5 microns, or larger openings (e.g. about 60 microns to about 100 microns).

The porous filter element may be in the form of a membrane, and it may comprise a polymeric matrix composed of cellulose acetate and polyethylenimine (PEI), and crosslinked with glutaraldehyde.

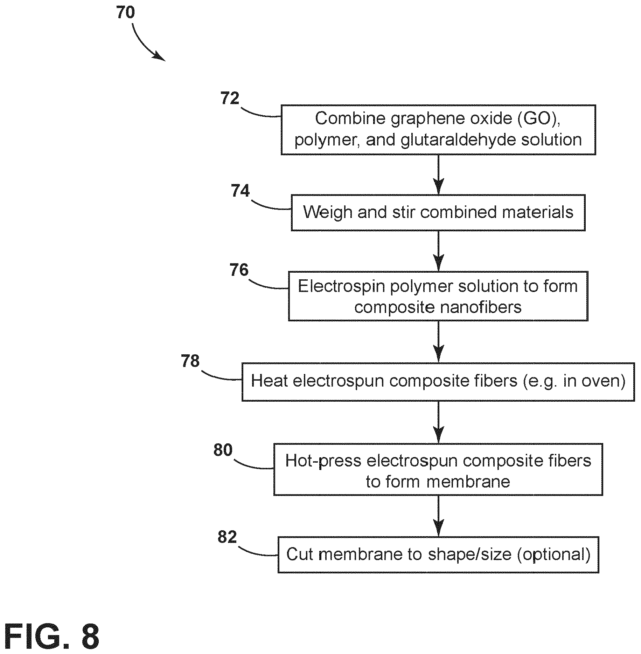

With reference to FIG. 8, the porous membrane may be formed utilizing a process or method 70 that includes combining graphene oxide (GO), polymer, and glutaraldehyde solution at step 72. The combined materials are then weighed and then stirred for a sufficient time (e.g. several hours) at step 74 to obtain a substantially homogeneous glutaraldehyde spinning solution. The mixture may be stirred utilizing a magnetic stirrer apparatus or other suitable device. The high concentration of PTFE aqueous emulsion, GO, cellulose acetate, and matrix polymer glutaraldehyde are mixed at step 74 to make a spinning solution.

The polymer solution is then electrospun into nanofibers at room temperature at step 76. For the electrospinning process (step 76), an electronic spinning device may be used. The spinning device may optionally operate at 220 V and the output voltage may reach 22 kV. The dispersion for electrospinning may be prepared by mixing GO and a PTFE dispersion and cellulose acetate solution (about 15 wt %). The composition may be about 5.5 wt % cellulose acetate, PTFE: V = 5:1. In one example, about 6 wt % of cellulose acetate is used while dissolved in water, whereas GOx (graphene oxide) and PTFE (Polytetrafluoroethylene) loading concentration may be about 28 wt %, respectively. Electrospinning (step 76) may be performed at a constant applied voltage of about 20 kV, with an advancement rate of about 0.06 mL·min-1, and a spinning distance of about 11.5 cm. Because it may be somewhat difficult to spin pure PTFE into nanofibers directly by solution electrospinning, a small amount of water-soluble cellulose acetate or other suitable material may optionally be added into the cellulose acetate/PTFE dispersion as an assistant polymer. In the electrospinning process of cellulose acetate/PTFE dispersion, cellulose acetate may support the fibrous arrangement of PTFE particles.

After electrospinning at step 76, the electrospun composite fibers may be placed in a high-temperature oven (step 78) at about 250 °C for a period of time (e.g. about 8 min). A hot-pressing process (step 80) may then be used to compact the fibers. Hot-pressing may utilize a hot-pressing pressure of ^{~} 1.2 MPa, a temperature of about 199 °C, and a hot-pressing time of ^{~}15 seconds. It will be understood that virtually any suitable pressure, temperature, and hot-pressing time may be utilized as required for a particular application to provide a membrane having desired properties such as thickness, opening sizes, membrane flexibility/stiffness, etc. The hot-pressing process may utilize a pair of substantially flat plates that are brought together to contact opposite sides of the fibers. However, it will be understood that the hot-pressing process may, optionally, utilize non-planar upper and lower plates (mold parts) to contact opposite sides of the fibers to form a membrane or other filter element having a specific three-dimensional (3D) shape as required for a particular application. Hot pressing may optionally be controlled to provide a membrane (filter element) thickness of about 50 microns to about 150 microns. However, it will be understood that the hot-pressing process may be utilized to form membranes (filter element) of virtually any thickness as required for a particular application, and the present disclosure is not limited to membranes (filter elements) in the range of 50 microns to 150 microns. Specifically, membranes (filter elements) having significantly less than 50 microns (e.g. 5, 10, 20, 30, 40 microns) thickness may be formed. Similarly, thicker membranes (filter elements) (e.g. 200, 300, 400, 500, 1,000 or greater microns) may also be formed. The porous membrane (filter element) may optionally have openings of about 3.5 microns to about 5.0 microns. However, the membrane (filter element) may optionally have larger openings (e.g. 10.0, 20.0, 40.0, 50.0, 100.0, microns). The openings may be formed by utilizing a porous PTFE in the process described above. Use of porous PTFE provides for control of the pore (opening) size in the membrane (filter element) during the electrospinning process given the loading concentration of the other active ingredients such as GO and cellulose acetate.

At step 82, the membrane (filter element) is optionally cut to provide a specific perimeter size and shape as required for a particular application. The membrane (filter element) may have virtually any perimeter shape (e.g. rectangular, circular, etc.) and size as required for a particular application.

Still further, the porous membrane 46 (FIGS. 5-7) may comprise a first filter element in the form of a porous graphene mesh filter element having openings of about 60 microns to about 100 microns, and a second filter element such as a membrane 46A may be disposed downstream of porous membrane 46. The membrane 46A may optionally have smaller nominal openings (e.g. 5 microns) than upstream membrane 46, and may comprise one or more of Hydrophilic Polycarbonate (PC) having a static water contact angle of about 71.0 ± 2.7 degrees; Hydrophobic Cellulose Acetate (CA) having a static water contact angle of about 90-125 degrees; Hydrophobic Polytetrafluoroethylene (PTFE) having a static water contact angle of about 90-110 degrees; and Hydrophobic Graphene Oxide based carbon nanotube (GOx-CNT) having a static water contact angle of about 90-125 degrees; and Graphene Oxide based carbon nanotube (GOx-CNT) formed by blending polytetrafluoroethylene and cellulose acetate with graphene oxides as described above. When configured in this way, porous membrane 46 removes microfibers that may have passed through the filter element 22A, and the membrane 46A removes smaller particles that may have passed through the porous membrane 46.

Membranes 46 and/or 46A may be rigid, semi-rigid, or they may be flexible or at least somewhat flexible. Thus, a support 46B may optionally be positioned on the downstream side of membrane 46 and/or membrane 46A to prevent excessive flexing of membrane 46 and/or 46A. Support 46B may comprise a rigid material (e.g. polymer or metal) having relatively large openings to permit flow of water through support 46B, while providing sufficient rigidity to support membrane 46 and/or 46A if necessary to prevent excessive flexing/deformation.

It will be understood that membranes 46 and/or 46A may be utilized in a wide range of filters and applications other than the filter 22A of FIGS. 5 and 6.

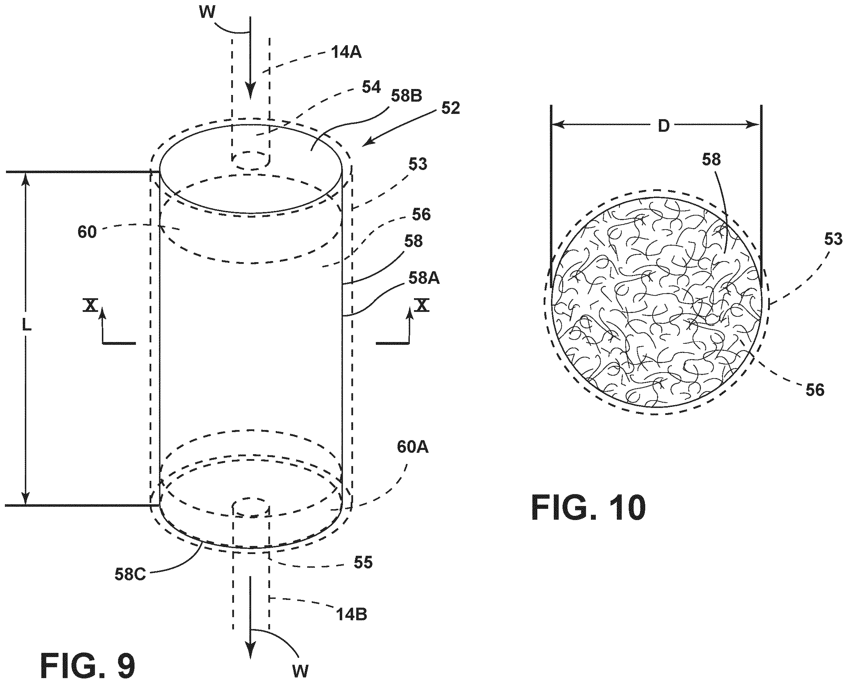

Referring again to FIG. 1, a filter 52 may optionally be utilized to filter water flowing through outlet line 14. Filter 52 may be located outside of washing machine 1, and may be connected to portions of water line 14 that are external to washing machine 1. With further reference to FIGS. 9 and 10, filter 52 may comprise a housing 53 having threaded fittings 54 and 55 that sealingly connect to first and second portions 14A and 14B, respectively, of water line 14. Housing 53 may comprise polymer, metal, combinations thereof, or other suitable materials. Portions 14A and 14B of water line 14 may be positioned substantially outside of housing 2 of washing machine 1. Housing 53 forms a cavity 56 having inner surfaces that may be substantially cylindrical, or other suitable shape.

Filter 52 further includes a porous filter element 58 disposed in cavity 56. Filter element 58 may comprise a porous cylindrical filter element having an outer surface 58A that is substantially cylindrical and opposite ends 58B, 58C. Opposite ends 58B, 58C may be substantially flat or other suitable shape. Filter element 58 may have a length "L" (FIG. 9) and a diameter "D" (FIG. 10). Filter element 58 may be generally oblong, whereby the length "L" is at least as large as the diameter. The length "L" may be significantly greater than the diameter "D" to permit filter 52 to be positioned between surfaces that are spaced apart a relatively small distance (e.g. 1.0 inches, 2.0 inches, 3.0 inches, 4.0 inches, 5.0 inches, 6.0 inches). For example, the length "L" may be at least about twice the diameter "D." Alternatively, filter element 58 may have a length "L" that is less than the diameter "D," whereby filter element 58 is generally disk-shaped rather than oblong. Length L may be about 2-6 inches, and the diameter D may also be about 2-6 inches. However, the present disclosure is not limited to these ranges and the length L and/or diameter D may be significantly less than 2 inches and significantly greater than 6 inches (e.g. 8, 10, 12, or more inches). Furthermore, although the cross-sectional shape and size of filter element 58 may be substantially the same along the length thereof as shown in FIG. 9, the cross-sectional shape and size of filter element 58 may vary along the length thereof. For example, the outer surface 58A of filter element 58 may be conical with flat opposite end surfaces 58B, 58C such that filter element 58 has a shape that is generally frusto-conical. Also, one or more portions of outer surface 58A may be non-cylindrical (e.g. flat). Thus, filter element 58 may have a shape in cross section that is square, rectangular, hexagonal, oval, elliptical, or any other suitable shape.

Filter element 58 may optionally comprise a substantially homogenous open mesh matrix that may optionally comprise graphene material that is closely received within the cavity 56 of housing 53. Substantially all of the water "W" flowing through filter 52 may pass through the solid filter element 58. Filter 52 may optionally include a mesh filter element 60 that is substantially disc-shaped. The mesh filter element 60 may have openings of about 100 microns or larger to remove larger particles from the water "W" before the water flows through the solid filter element 58.

Filter 52 may optionally include a filter element 60A that is substantially similar to filter element 46A (FIG. 7). Filter 52 may optionally include a filter element 60A that comprises a membrane having substantially similar construction as the filter element 46A described in more detail above in connection with FIG. 7. Membrane 60A may optionally have a circular perimeter that fits closely within a cylindrical inner surface of housing 53. Also, washing machine 1 may include only a filter 52, or washing machine 1 may include a filter 52 in any combination with one or more of the filters described above in connection with FIGS. 1-7. For example, filter 52 may comprise one or more of filter elements 58, 60, and 60A in any combination, and washing machine 1 may also include any of the filters and filter elements 22, 22A, 46, and 46A in any combination.

It will be understood that the filter elements described herein may be configured to provide adequate water flow as required for a particular application. Thus, the area of the filter elements and/or the number of openings through the filter elements may be selected to provide sufficient water flow for a given perforation/opening size and number of openings per unit area. Thus, the membranes and other filter elements described herein may have virtually any suitable size and configuration as may be required for a particular application.

According to another aspect of the present disclosure, a washing machine may optionally include a washing compartment and a water circulation system that is configured to connect to an external water supply and to supply water from the external water supply to the washing compartment and to drain water to an outlet of the water circulation system. The washing machine may optionally include a filter that is operably connected to the water circulation system to filter water flowing through the water circulation system. The filter may optionally comprise a preformed mesh and at least one porous membrane downstream of the preformed mesh, whereby water flowing through the water circulation system passes through the preformed mesh and then passes through the at least one porous membrane prior to exiting the outlet. The at least one porous membrane may optionally include a plurality of openings of about 3.5 microns to about to about 10 microns to capture particles from water flowing through the porous membrane.

The water circulation system of the washing machine may optionally include a pump that recirculates at least some water by causing water that has exited the washing compartment to flow through a detergent dispenser and then into the washing compartment. The preformed mesh may optionally comprise a polymer material, and the preformed polymer mesh may optionally be positioned in a fluid passageway upstream of the detergent dispenser. The at least one porous membrane may optionally be positioned in a fluid passageway adjacent to the outlet of the water circulation system whereby water that has passed through the washing compartment passes through the at least one porous membrane before flowing out of the outlet of the water circulation system.

The water circulation system of the washing machine may optionally include a fluid passageway downstream of the washing compartment, and the preformed mesh and the at least one porous membrane may optionally be disposed in the fluid passageway downstream of the washing compartment whereby water passes through the preformed mesh and the at least one porous membrane before flowing out of the outlet of the water circulation system.

The at least one porous membrane may optionally include pores of about 1 micron to about 10 microns, and may optionally comprise one or more of Hydrophilic Polycarbonate (PC) having a static water contact angle of about 71.0 ± 2.7 degrees, and/or Hydrophilic Cellulose Acetate (CA) having a static water contact angle of about 62.7 ± 0.6 degrees, and/or Hydrophobic Polytetrafluoroethylene (PTFE) having a static water contact angle of about 76.3 ± 3.2 degrees, and/or Graphene Hydrophobic Oxide based carbon nanotube (GOx-CNT) having a static water contact angle of about 52.0 ± 0.15 degrees. The at least one porous membrane may optionally be configured to remove polymer microparticles of about 20 microns to about 300 microns from the water. The at least one porous membrane may optionally comprise PC by itself, CA by itself, PTFE by itself, or GOx-CNT by itself, or the at least one porous membrane may comprise any combination of these materials, and may optionally further include additional materials. The at least one porous membrane may optionally comprise cellulose acetate having a pore size of about 3.5 microns to about 5 microns. The at least one membrane may optionally comprise polytetrafluoroethylene and cellulose acetate blended with graphene oxides. The at least one porous membrane may optionally comprise a perforated graphene mesh filter having perforations of about 60 microns to about 100 microns to remove microfibers. The at least on porous membrane may optionally include a first porous membrane in the form of a perforated graphene mesh filter having perforations of about 60 microns to about 100 microns to remove microfibers, and a second porous membrane having pores of about 3.5 microns to about 5 microns downstream of the perforated graphene mesh filter. The second porous membrane may optionally comprise one or more of Hydrophilic Polycarbonate (PC) having a static water contact angle of about 71.0 ± 2.7 degrees; Hydrophobic Cellulose Acetate (CA) having a static water contact angle of about 90-125 degrees; Hydrophobic Polytetrafluoroethylene (PTFE) having a static water contact angle of about 90-110 degrees; or Hydrophobic Graphene Oxide based carbon nanotube (GOx-CNT) having a static water contact angle of about 90-125 degrees. The second porous membrane may optionally comprise PCT only, CA only, PTFE only, GOx-CNT only, or any combination of these materials, and may optionally include additional materials.

According to another aspect of the present disclosure a washing machine may optionally include a compartment and a water circulation system that causes water to flow through the washing compartment prior to exiting the washing machine through a water line on an exterior of the washing machine. The washing machine may optionally include a filter that is fluidly connected to the water line. The filter may optionally comprise a filter housing having an inner surface disposed about a filter cavity. The filter may optionally further include an oblong porous filter element disposed in the filter cavity, wherein the oblong porous filter element comprises a substantially homogenous open mesh matrix of graphene, and a length and a width, wherein the length is greater than the width. The porous cylindrical filter element may optionally include openings of about 60 microns to about 100 microns. The porous cylindrical filter element may optionally include a cylindrical outer surface and opposite ends. The water line may optionally comprise first and second sections, and the filter housing may optionally include first and second threaded fittings at opposite ends that are sealingly connected to ends of the first and second sections, respectively, of the water line. The filter may optionally further include a mesh upstream of the porous cylindrical filter element, wherein the mesh may optionally have openings of at least about 100 microns. The filter may optionally further include a porous membrane downstream of the porous cylindrical filter element, wherein the porous membrane may optionally have openings therethrough of about 3.5 microns to about 5 microns. The porous membrane may optionally comprise one or more of hydrophilic Polycarbonate (PC) having a static water contact angle of about 71.0 ± 2.7 degrees; Hydrophobic Cellulose Acetate (CA) having a static water contact angle of about 90-125 degrees; Hydrophobic Polytetrafluoroethylene (PTFE) having a static water contact angle of about 90-110 degrees; or Hydrophobic Graphene Oxide based carbon nanotube (GOx-CNT) having a static water contact angle of about 90-125 degrees. The porous membrane may optionally comprise PC by itself, CA by itself, PTFE by itself, GOx-CNT by itself, or it may optionally include two or more of these materials in any combination, and may optionally include additional materials. The washing machine may optionally include a detergent dispenser, and the water circulation system may optionally be configured to cause at least some water to flow from the washing compartment and through the detergent dispenser before flowing back into the washing compartment. The water circulation system may optionally include a polymer mesh filter upstream of the detergent dispenser.

According to yet another aspect of the present disclosure, a filter for removing microparticles from water that has passed through a washing compartment of a washing machine may optionally include a porous membrane having openings therethrough that are optionally about 3.5 microns to about 5 microns, wherein the porous membrane optionally comprises one or more of Hydrophilic Polycarbonate (PC) having a static water contact angle of about 71.0 ± 2.7 degrees; Hydrophobic Cellulose Acetate (CA) having a static water contact angle of about 90-125 degrees; Hydrophobic Polytetrafluoroethylene (PTFE) having a static water contact angle of about 90-110 degrees; or Hydrophobic Graphene Oxide based carbon nanotube (GOx-CNT) having a static water contact angle of about 90-125 degrees. The porous membrane may optionally comprise PC by itself, CA by itself, PTFE by itself, GOx-CNT by itself, or two or more of these materials in any combination, and may optionally include additional materials. The filter may optionally include a perforated graphene mesh filter upstream of the porous membrane, wherein the perforated graphene mesh filter may optionally have perforations of about 60 microns to about 100 microns to remove microfibers. The filter may optionally include a plastic mesh filter upstream of the perforated graphene mesh filter, and the plastic mesh filter may optionally have openings therethrough that are greater than about 100 microns. The filter may optionally be fluidly connected to a water circulation system of the washing machine to filter water before the water exits the washing machine. The porous membrane may optionally be formed by blending polytetrafluoroethylene and cellulose acetate with graphene oxides. The plastic mesh filter may optionally include a preformed polymer mesh sidewall having four planar portions that are joined to form a quadrilateral upper opening and a quadrilateral lower opening forming an outlet opening.

According to another aspect of the present disclosure, a method of making a porous polymeric matrix filter element includes combining graphene oxide (GO), a polymer, and glutaraldehyde to form a solution. The method may optionally further include stirring the solution until it forms a substantially homogeneous glutaraldehyde solution. The method may optionally include mixing a PTFE aqueous emulsion, GO, cellulose acetate, and the homogeneous glutaraldehyde solution to form a spinning solution. The method may optionally include electrospinning the spinning solution to form composite nanofibers. The method may optionally include heating and pressing the nanofibers to form a porous polymeric matrix suitable for filtering particles from a liquid. A dispersion for electrospinning may optionally be formed by mixing GO, a PTFE dispersion, and a cellulose acetate solution of about 5-25 weight %. The cellulose acetate solution may optionally be about 14-16 weight %, and the dispersion may optionally comprise about 2%-10% cellulose acetate. The dispersion may optionally comprise about 5-7% cellulose acetate. The GO and PTFE loading may optionally comprise about 18 weight % to about 38 weight %. The electrospinning may optionally be performed at a voltage of about 15-25 kV, with an advancement rate that is optionally about 0.03-0.10 mL·min-1, and with a spinning distance that is optionally about 8.0-15.0 cm. The method may optionally include adding water soluble cellulose acetate to the dispersion as an assistant polymer to facilitate electrospinning, and the method may optionally further include heating the composite nanofibers to at least about 200°C prior to pressing the composite nanofibers. Heating the nanofibers may optionally include positioning the composite nanofibers in an oven. The composite nanofibers may optionally be heated to about 230-270 °C prior to optional pressing of the composite nanofibers. The composite nanofibers may optionally be pressed at a pressure of about 0.8-1.4 MPa. The method may optionally include utilizing porous PTFE to control the pore size during the electrospinning process.

## Claims

1. A washing machine (1), comprising:
a washing compartment (3);
a water circulation system (10) that is configured to connect to an external water supply (13) and to supply water from the external water supply (13) to the washing compartment (3) and to drain water to an outlet (15) of the water circulation system (10); and
a filter (22, 46) operably connected to the water circulation system (10) to filter water flowing through the water circulation system (10), the filter (22, 46) comprising at least one porous membrane (46) having a plurality of openings (45) of 3.5 microns to 100 microns to capture particles from water flowing through the porous membrane (46).

2. The washing machine (1) of claim 1, wherein:
the filter (22, 46) further comprises a preformed mesh (22A) whereby water flowing through the water circulation system (10) passes through the preformed mesh (22A) and then passes through the at least one porous membrane (46) prior to exiting the outlet;
the water circulation system (10) includes a pump (36) that recirculates at least some water by causing water that has exited the washing compartment (3) to flow through a detergent dispenser (20) and then into the washing compartment (3);
the preformed mesh (22A) comprises a polymer material, wherein the preformed polymer mesh (22A) is positioned in a fluid passageway upstream of the detergent dispenser (20); and
the at least one porous membrane (46) is positioned in a fluid passageway (14) adjacent to the outlet (15) of the water circulation system (10) whereby water that has passed through the washing compartment (3) passes through the at least one porous membrane (46) before flowing out of the outlet (15) of the water circulation system (10).

3. The washing machine (1) of either claim 1 or claim 2, wherein:
the at least one porous membrane (46) comprises one or more of:
- Hydrophilic Polycarbonate (PC) having a static water contact angle of 71.0 ± 2.7 degrees;
- Hydrophilic Cellulose Acetate (CA) having a static water contact angle of 62.7 ± 0.6 degrees;
- Hydrophobic Polytetrafluoroethylene (PTFE) having a static water contact angle of 76.3 ± 3.2 degrees; and/or
- Graphene Hydrophobic Oxide based carbon nanotube (GOx-CNT) having a static water contact angle of 52.0 ± 0.15 degrees,
wherein the plurality of openings (45) includes pores (45) of 3.5 microns to 5 microns, whereby the at least one porous membrane (46) removes microparticles of 20 microns to 300 microns from the water.

4. The washing machine (1) of claim 1, wherein:
the at least one porous membrane (46) comprises cellulose acetate having a pore (45) size of 3.5 microns to 5 microns.

5. The washing machine (1) of claim 1, wherein:
the at least one porous membrane (46) comprises polytetrafluoroethylene and cellulose acetate blended with graphene oxides.

6. The washing machine (1) of any of previous claims, wherein:
the at least one porous membrane (46) comprises a perforated graphene mesh filter having perforations (45) of 60 microns to 100 microns to remove microfibers.

7. The washing machine (1) of claim 1, wherein:
the at least one porous membrane (46) includes a first porous membrane (46) in the form of a perforated graphene mesh filter having perforations (45) of 60 microns to 100 microns to remove microfibers, and a second porous membrane (46A) having pores (45) of 3.5 microns to 5 microns downstream of the perforated graphene mesh filter.

8. The washing machine (1) of any one of claims 1-7, wherein:
the water circulation system (10) causes water to flow through the washing compartment (3) prior to exiting the washing machine (1) through a water line (14) on an exterior of the washing machine (1); and including:
a filter (52) that is fluidly connected to the water line (14), the filter (52) comprising a filter housing (53) having an inner surface disposed about a filter cavity (56), the filter (52) including an oblong porous filter element (58) disposed in the filter cavity (56), wherein the oblong porous filter element (58) comprises a substantially homogenous open mesh matrix of graphene, and a length and a width, wherein the length is greater than the width.

9. The washing machine (1) of claim 8, wherein:
the porous cylindrical filter element (58) includes openings of 60 microns to 100 microns.

10. The washing machine (1) of any one of claims 1-9, wherein:
the washing machine (1) includes a detergent dispenser (20);
the water circulation system (10) is configured to cause at least some water to flow from the washing compartment (3) and through the detergent dispenser (20) before flowing back into the washing compartment (3); and
the water circulation system (10) includes a polymer mesh filter (22A) upstream of the detergent dispenser (20).

11. The washing machine (1) of any one of claims 1-10, wherein:
the at least one porous membrane (46) has openings (45) therethrough of 3.5 microns to 5 microns.

12. The washing machine (1) of any one of claims 1-11, wherein:
the at least one porous membrane (46) is formed by:
combining graphene oxide (GO), a polymer, and glutaraldehyde to form a solution (72);
stirring the solution until it forms a substantially homogeneous glutaraldehyde solution (74);
mixing a PTFE aqueous emulsion, GO, cellulose acetate, and the homogeneous glutaraldehyde solution to form a spinning solution (76);
electrospinning the spinning solution to form composite nanofibers (76); and
heating and pressing the nanofibers to form a porous polymeric matrix suitable for filtering particles from a liquid (80).

13. The washing machine (1) of claim 12, wherein:
a dispersion for electrospinning is formed by mixing GO, a PTFE dispersion, and a cellulose acetate solution of 5-25 weight %;
the cellulose acetate solution is 14-16 weight %, and the dispersion comprises 2%-10% cellulose acetate.

14. The washing machine (1) of claim 13, wherein:
the GO and PTFE loading comprises 18 weight % to 38 weight %;
the dispersion comprises 5-7% cellulose acetate;
electrospinning is performed at a voltage of 15-25 kV, with an advancement rate of 0.03-0.10 mL·min-1, and with a spinning distance of 8.0-15.0 cm.

15. The washing machine (1) of claim 14, wherein:
water soluble cellulose acetate is added to the dispersion as an assistant polymer to facilitate electrospinning;
the composite nanofibers are heated in an oven to at least 200°C prior to pressing the composite nanofibers; and
porous PTFE is utilized to control the pore size during the electrospinning process.
